# EUROPÄISCHE PATENTSCHRIFT

(11) **EP 2 480 907 B1**
(45) Veröffentlichungstag und Bekanntmachung des Hinweises auf die Patenterteilung: **16.10.2013**
(21) Anmeldenummer: 10742856.7
(22) Anmeldetag: 18.08.2010
(51) Int. Cl.: G01S 3/80, G01S 3/803

(54) **VERFAHREN UND VORRICHTUNG ZUM PEILEN VON SCHALLABSTRAHLENDEN ZIELEN**
METHOD AND DEVICE FOR LOCATING SOUND-EMITTING TARGETS
PROCÉDÉ ET DISPOSITIF DE LOCALISATION DE CIBLES ÉMETTANT UN RAYONNEMENT

(30) Priorität: 24.09.2009 DE 102009042967
(43) Veröffentlichungstag der Anmeldung: 01.08.2012
(73) Patentinhaber: ATLAS ELEKTRONIK GmbH, 28309 Bremen (DE)
(72) Erfinder: FREKING, Benno, 28844 Weyhe-Leeste (DE)
(74) Vertreter: Weidner Stern Jeschke
(86) Internationale Anmeldenummer: PCT/EP2010/062041
(87) Internationale Veröffentlichungsnummer: WO 2011/035995

(56) Entgegenhaltungen:
- EP-A1- 0 643 439
- EP-A1- 0 715 182

## Beschreibung

Die Erfindung betrifft ein Verfahren zum Peilen von schallabstrahlenden Zielen mittels einer Empfangsantenne der im Oberbegriff von Anspruch 1 genannten Art sowie eine entsprechende Vorrichtung der im Oberbegriff von Anspruch 6 genannten Art.

Bei der Peilung von schallabstrahlenden Zielen werden die von diesen Zielen oder Objekten abgestrahlten Geräusche oder reflektierten Schallwellen durch passive Schallmessverfahren detektiert und ihre Richtung bestimmt. Dazu werden herkömmlicherweise die Schallwellen mit einer Sonar-Empfangsanlage empfangen, welche eine Vielzahl elektroakustischer oder optoakustischer Wandler zum Empfangen von Schallwellen und Erzeugen von elektrischen Empfangssignalen aufweist.

Um die Richtung der empfangenen Schallwellen zu bestimmen ist der Empfangsantenne ein Richtungsbildner nachgeschaltet, in dem die Empfangssignale der Wandler zur Bildung eines eine Richtcharakteristik bestimmenden Gruppensignals gruppenweise aufaddiert werden. Zur Erzielung eines solchen Gruppensignals werden die Empfangssignale mittels sog. Zeitverzögerungskoeffizienten derart zeitverzögert, dass sie bezogen auf eine Hauptrichtung der Richtcharakteristik konphas zueinander sind, und anschließend zur Bildung des Gruppensignals aufaddiert. Dabei werden die Zeitverzögerungskoeffizienten vorbestimmt durch die Lage des jeweiligen Wandlers bezüglich der Hauptrichtung der Richtcharakteristik. Somit können durch unterschiedliche Zeitverzögerungskoeffizienten eine Vielzahl von Richtcharakteristiken gebildet werden, die alle um einen unterschiedlich großen, insbesondere horizontalen, Winkel gegeneinander und gegen eine Bezugsebene, wie bspw. die Normalenebene der Antenne geschwenkt sind.

Als Empfangsantenne werden z.B. Linearantennen oder Zylinderbasen verwendet. Bei Linearantennen sind die Wandler längs einer Geraden regelmäßig angeordnet. Zum Bilden des Gruppensignals einer Richtcharakteristik werden die Empfangssignale der längs der Geraden angeordneten Wandler zeitgleich aufsummiert. Die Hauptempfangsrichtung dieser Richtcharakteristik weist in Richtung der Senkrechten der Antenne und ist durch elektronische Maßnahmen schwenkbar. Bei nicht linearen Antennen, wie beispielsweise Zylinderbasen, werden die Empfangssignale zum Zwecke ihrer konphasen Aufsummierung zeitgleich derart verzögert, als ob die einfallende Schallwellenfront die Gruppe der gemeinsam betriebenen Wandler an deren fiktiven Ort auf einer zur Hauptempfangsrichtung der Richtcharakteristik rechtwinklig ausgerichteten Linie gleichzeitig erreicht, wobei die Hauptempfangsrichtung durch elektronische Maßnahmen schwenkbar ist. Die Zeitverzögerungskoeffizienten werden für jeden Wandler aus dem Abstand des fiktiven Ortes des Wandlers vom tatsächlichen Wandlerort bestimmt.

Die graphische Darstellung einer Richtcharakteristik in einer Schnittebene wird als Richtdiagramm bezeichnet. Es beschreibt die Empfindlichkeit der Antenne beispielsweise durch Auftragen der Ausgangsspannung in Abhängigkeit von dem Schalleinfallswinkel und ist üblicherweise auf einen Maximalwert normiert. Die Darstellung erfolgt entweder in einem Polardiagramm oder in kartesischen Koordinaten mit entweder linearer oder logarithmischer radialer Skalierung. Ein Richtdiagramm enthält mindestens eine Hauptkeule und evtl. mehrere Nebenkeulen oder auch Nebenzipfel genannt. Jedes Maximum wird beiderseits durch eine Nullstelle begrenzt. Die Hauptkeule zeigt dabei in die Hauptempfangsrichtung der Antenne. Die Nebenkeulen sind üblicherweise jedoch unerwünscht, da sie den eindeutigen Richteffekt der Antenne beeinträchtigen und die Hauptkeule schwächen. Um die Auswirkungen dieses ungewollten Empfangs zu verringern, werden oftmals im Empfänger zusätzliche Maßnahmen zur Nebenkeulenunterdrückung getroffen, beispielsweise mittels einer geeigneten Shading-Funktion.

Aus EP 0715182 A1 ist ein Verfahren zum Peilen schallabstrahlender Ziele mit einer Anzahl benachbarter, sich überlappender Richtcharakteristiken bekannt. Zum Bestimmen der Richtung der empfangenen Schallwellen wird eine Winkelfunktion aus den Gruppensignalen einer Peilanlage in Abhängigkeit von ihren Hauptempfangsrichtungen gebildet. Dabei sind die Gruppensignale Abtastwerte und ihre Hauptempfangsrichtungen unabhängige Variable der Winkelfunktion. Im ungestörten Empfangsfall weist die Winkelfunktion einen charakteristischen idealen Verlauf auf, der in einer Referenzfunktion nachgebildet ist. Im realen Empfangsfall weicht die Winkelfunktion von dem idealen Verlauf ab. Um die Zieltrennung zweier dicht benachbarter Ziele zu ermöglichen, wird die reale Winkelfunktion mit einer Referenzfunktion verglichen.

Nachteilig dabei ist, dass mittels dieses Verfahrens lediglich der gemeinsame, akustische Schwerpunkt zweier Ziele bestimmt werden kann. Es wird eine Annahme getroffen, dass beide Ziele einen gleichen Winkelabstand von der Richtung ihres akustischen Schwerpunktes aufweisen. Eine exakte Peilung zweier oder mehrerer benachbarter Ziele ist mit einem derartigen Verfahren nicht möglich.

DE 69 410 196 T2 zeigt ein Verfahren zum Durchführen einer Strahlungskeulenkompression von Radarantennendiagrammen. Um ein Reduzieren der Keulenbreite zu erzielen, weist das zur Durchführung des Verfahrens verwendete Radarsystem zwei ähnliche Antennen auf. Die Signale, die mit den genannten Antennen empfangen werden, werden zu einem Summensignal und einem Differenzsignal zusammengefasst. Sowohl das Summensignal als auch das Differenzsignal werden in Bezug auf den Abtastwinkel zweimal differenziert. Für den Fall, dass der doppelte Differentialquotient des Summensignals gleich oder kleiner als ein positiver vordefinierter echter Zahlenwert ist und dass der doppelte Differentialquotient des Differenzsignals gleich oder größer als ein negativer vordefinierter echter Zahlenwert ist, wird ein Ausgangssignal ausgegeben. In allen anderen Fällen wird ein Null-Signal ausgegeben.

Hochauflösende Verfahren zur Winkeltrennung umgehen diesen Nachteil. Mit ihnen ist es prinzipiell möglich, Ziele mit geringen Winkelunterschieden, die unterhalb der Auflösungsgrenze des Richtungsbildners liegen, zu trennen. Ein bekanntes hochauflösendes Verfahren ist beispielsweise das MUSIC (Multiple Signal Classification)-Verfahren. Dies ist eine sog. Unterraummethode, bei der zuerst eine Schätzung über die Anzahl der Ziele erfolgt. Im Idealfall lassen sich Eigenwerte, die den Signalen zugeordnet werden können, eindeutig von den Eigenwerten trennen, die zum Rauschen gehören. Dies wird zur Schätzung der Anzahl empfangener Signale genutzt. Jedoch wird die Unterraummethode durch verschiede Faktoren negativ beeinflusst. Das MUSIC-Verfahren liefert bislang lediglich ungenaue Messwerte.

Der Erfindung liegt daher das Problem zugrunde, eine genaue Peilung von mehreren, dicht benachbarten, schallabstrahlenden Zielen gleichzeitig zu ermöglichen, insbesondere, wenn die Signalrichtungen der zu detektierenden Schallwellen zu einem Zeitpunkt innerhalb einer Hauptkeule einer Richtcharakteristik liegen.

Die Erfindung löst dieses Problem durch ein Verfahren bzw. eine Vorrichtung mit den Merkmalen des Anspruchs 1 bzw. 6.

Das erfindungsgemäße Verfahren nutzt den Vorteil einer speziellen Anordnung von Richtcharakteristiken. Ein Richtungsbildner bildet hierzu wenigstens drei gegeneinander versetzte Richtcharakteristiken. Die zur Erzeugung der Richtcharakteristiken benötigten Zeitverzögerungskoeffizienten werden dabei derart gewählt, dass eine zentrale Richtcharakteristik mit einer Hauptkeule erzeugt wird. Die eventuell vorhandenen Nebenkeulen werden in diesem Verfahren vernachlässigt.

Bei einer gedachten Darstellung der Richtcharakteristiken in einem horizontalen, kartesischen Richtdiagramm, in dem die Antennenausgangsspannung über den Empfangswinkel der Schallwellen aufgetragen ist, wird die Hauptkeule der zentralen Richtcharakteristik von beiden Seiten durch die Hauptkeulen benachbarter Richtcharakteristiken überlappt. Diese Überlappung erfolgt dahingehend, dass sich diese beiden Hauptkeulen auf Höhe desjenigen Empfangswinkels berühren oder schneiden, an dem die Hauptkeule der zentralen Richtcharakteristik ihr Maximum aufweist. Mit dieser vorteilhaften Anordnung der Richtcharakteristiken wird ein zu untersuchender Richtungsbereich mit sehr kleinen Winkelschritten abgetastet.

Die Erfindung hat ferner den Vorteil erkannt, für eine potentielle Richtungsbestimmung nicht die winkelmäßig breiten Maxima der Hauptkeulen der Richtcharakteristiken heranzuziehen, sondern die scharfen Minima. Um diesen Vorteil auszunutzen werden wenigstens drei richtungsabhängige Amplitudenfunktionen mittels der Hauptkeulen der zuvor erzeugten Richtcharakteristiken erzeugt, und zwar durch Abtastung eines vorbestimmten Richtungsbereiches um eine angenommene Signalrichtung in vorbestimmten, gleich bleibenden Winkelabständen. Durch Addition der beiden richtungsabhängigen Amplitudenfunktionen, welche sich aus den beiden, die zentrale Richtcharakteristik von beiden Seiten benachbarten, Richtcharakteristiken ergeben, entsteht eine sog. Summenfunktion. Mittels dieser Summenfunktion ist eine Bestimmung von potentiellen Signalrichtungen der einfallenden Schallwellen durch zweimaliges Differenzieren der Summenfunktion nach dem Winkel möglich. Die zweite Ableitung der Summenfunktion gibt im Prinzip die Steigung der Steigung an und enthält lokale Maxima. Diese lokalen Maxima entsprechen eventuellen, potentiellen Signalrichtungen, aus denen die tatsächlichen Signalrichtungen selektiert werden.

Durch den vorteilhaften Einsatz eines statistischen Analyseverfahrens wie beispielsweise die multiple lineare Regression lassen sich die jeweiligen Anteile der einzelnen eventuellen, potentiellen Signalrichtung an der gemessenen zentralen richtungsabhängigen Amplitudenfunktion angeben. Dadurch ergeben sich die Signalstärken der potentiellen Signalrichtung aus denen die tatsächlichen Signalrichtungen bestimmt werden können, indem diejenigen Signalrichtungen verworfen werden, deren Signalstärke bzw. Amplitude sehr gering ist.

Das erfindungsgemäße Verfahren hat somit den Vorteil, mehrere, innerhalb einer Hauptkeule einer Richtcharakteristik liegende Signalrichtungen mehrerer schallabstrahlender Ziele oder Objekte zu detektieren, auch dann, wenn die Schallwellen zeitgleich an der Empfangsantenne eintreffen.

In einer bevorzugten Ausführungsform der Erfindung werden die richtungsabhängigen Amplitudenfunktionen erzeugt mittels Schwenken der Richtcharakteristiken mit der zuvor erwähnten Anordnung über einen vorbestimmen Richtungsbereich um eine angenommene Signalrichtung und Abtastung dieses Richtungsbereiches in sehr kleinen Winkelschritten. Diese sequentielle Verarbeitung besitzt den Vorteil einer Realisierung mit einem relativ geringen Hardwareaufwand von bspw. ein bis drei Recheneinheiten.

Gemäß einer weiteren Ausführungsform der Erfindung werden die richtungsabhängigen Amplitudenfunktionen erzeugt mittels gleichzeitiger Richtungsbildung der Richtcharakteristiken mit vorbestimmtem, gleich bleibendem Winkelabstand über einen vorbestimmten Richtungsbereich um eine angenommene Signalrichtung. Der Winkelabstand wird gemäß der gewünschten Auflösung klein gewählt, beispielsweise 0,1 Grad. Diese parallele Verarbeitung weist eine vorteilhafte geringe Taktfrequenz der Recheneinheiten auf. Ferner besteht der Vorteil dieser parallelen Verarbeitung bei einer vergleichsweise hohen Taktfrequenz der Recheneinheit darin, dass eine hohe Aktualisierungsrate der Peilung möglich ist. Dies ist besonders bei der Peilung von schnell anlaufenden Zielen vorteilhaft.

In einer weiteren bevorzugten Ausführungsform der Erfindung liefert das statistische Analyseverfahren, bspw. die multiple lineare Regression, weitere Werte, welche vorteilhaft ein Maß für die Genauigkeit des erfindungsgemäßen Verfahrens angeben. Die multiple lineare Regression weist den Vorteil auf, einen evtl. vorhandenen Gleichanteil und/oder ein Maß für die Güte der Messergebnisse zu bestimmen, wobei die Güte mittels der Standardabweichung bestimmt wird und ein Maß für die Übereinstimmung liefert.

In einer weiteren bevorzugten Ausführungsform der Erfindung wird das erfindungsgemäße Verfahren mehrmalig in kurzen Zeitabständen angewandt. Dadurch entsteht der Vorteil einer im Wesentlichen kontinuierlichen Anwendung, welche eine statistische Auswertung bezüglich der Eindeutigkeit der Messergebnisse ermöglicht. Darüber hinaus besitzt die kontinuierliche Anwendung des Verfahrens den Vorteil einer dynamischen Erkennung von evtl. Richtungsänderungen der schallabstrahlenden Ziele.

Weitere vorteilhafte Ausführungsformen ergeben sich aus den Unteransprüchen sowie aus den anhand der anliegenden Zeichnung näher erläuterten Ausführungsbeispielen. In der Zeichnung zeigen:
- Fig. 1: ein Blockschaltbild des Verfahrens zum Peilen von schallabstrahlenden Zielen,
- Fig. 2: ein horizontales, kartesisches Richtdiagramm,
- Fig. 3 A-C: eine graphische Darstellung zur Bildung der richtungsabhängigen Amplitudenfunktion über einen vorbestimmten Richtungsbereich,
- Fig. 4 A-B: eine graphische Darstellung der Summenfunktion sowie deren erste und zweite Ableitung,

- Fig. 5: eine graphische Darstellung von realen Messwerten eines Ausführungsbeispiels und
- Fig. 6: eine graphische Darstellung berechneter Amplituden für jede potentielle Signalrichtung.

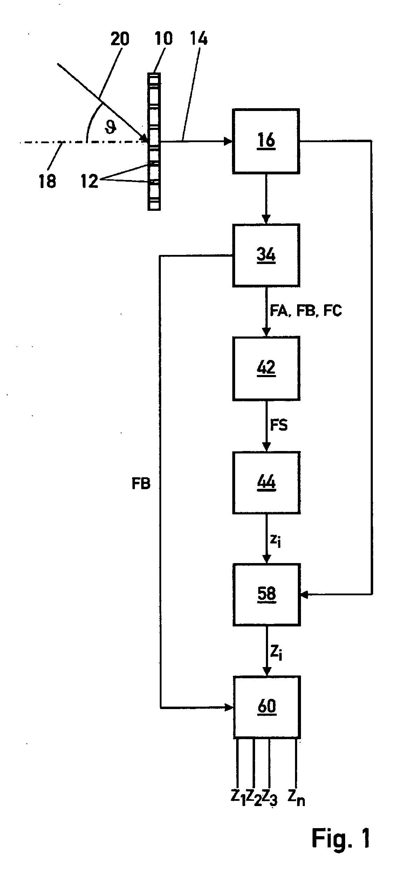

Fig. 1 zeigt den schematischen Aufbau eines Ausführungsbeispiels zum Peilen von schallabstrahlenden Zielen oder Objekten in Form eines Blockschaltbildes.

Dargestellt ist eine Linearantenne als Empfangsantenne 10 mit einer Vielzahl von elektroakustischen oder optoakustischen Wandlern 12, die vorzugweise im gleichen Abstand voneinander entlang einer Geraden angeordnet sind.

Die Erfindung ist jedoch nicht auf derartige Linearantennen beschränkt. Bei alternativen Ausführungsbeispielen kommen andere Empfangsantennen, wie beispielsweise Zylinderbasen zur Anwendung.

Eine von einem Ziel oder Objekt abgestrahlte Schallwellenfront erreicht die Wandler 12 der Empfangsantenne 10 und erzeugt an deren Ausgang jeweils ein entsprechendes Empfangssignal 14. Die Empfangssignale 14 werden dem Richtungsbildner 16 übergeben, um hier in bekannter Weise zeitverzögert und konphas zu Gruppensignalen jeweils einer Richtcharakteristik verarbeitet zu werden. Alle Richtcharakteristiken weisen eine Hauptkeule in Hauptempfangsrichtung sowie potentielle Nebenkeulen - auch Nebenzipfel genannt - auf. Da diese Nebenkeulen unerwünscht sind und durch eine Amplitudenstaffelung der zeitverzögerten Empfangssignale, dem sog. Shading, reduziert werden, werden diese im weiteren Verlauf der Beschreibung nicht weiter berücksichtigt.

Für mehrere Richtcharakteristiken, deren jeweilige vorgebbare Hauptempfangsrichtungen gegenüber einer Bezugsrichtung 18 geschwenkt sind, werden die Empfangssignale 14 der Wandler 12 in Abhängigkeit von einem Empfangswinkel ϑ verzögert. Als Bezugsrichtung 18 wird üblicherweise die Horizontalrichtung rechtwinklig zur Antenne - auch als Querabrichtung bezeichnet - gewählt.

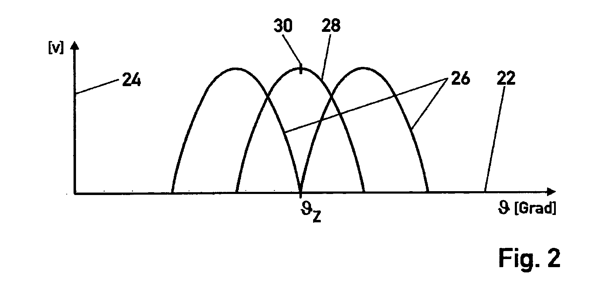

Im beschriebenen Ausführungsbeispiel erzeugt der Richtungsbildner 16 für eine angenommene Signalrichtung 20 der empfangenen Schallwellenfront drei versetzte, sich überlappende Richtcharakteristiken in einer speziellen, bevorzugten Anordnung. Diese spezielle Anordnung wird im Einzelnen anhand der Darstellung in Fig. 2 näher erläutert.

Fig. 2 zeigt ein horizontales, kartesisches Richtdiagramm dreier speziell angeordneter Richtcharakteristiken. Dabei wird auf einer horizontalen Achse 22 der Empfangswinkel ϑ in Grad aufgetragen und auf einer vertikalen Achse 24 die normierte Antennenausgangsspannung U/Uo in Volt. Dargestellt sind die drei Hauptkeulen 26, 28 der jeweiligen Richtcharakteristiken. Die zugehörigen Nebenkeulen werden, wie oben erwähnt, vernachlässigt.

Die Richtcharakteristiken werden mittels des Richtungsbildners 16 unter Verwendung entsprechender Zeitverzögerungskoeffizienten derart ausgebildet, dass eine Hauptkeule 28 einer zentralen Richtcharakteristik entsteht, welche von beiden Seiten durch Hauptkeulen 26 benachbarter Richtcharakteristiken überlappt wird. Wesentlich dabei ist, dass bei dieser gedachten Darstellungsform des Richtdiagramms sich die Hauptkeulen 26 auf Höhe des Empfangswinkels ϑ_{z} berühren oder schneiden, bei dem die Hauptkeule 28 der zentralen Richtcharakteristik ihr Maximum 30 aufweist.

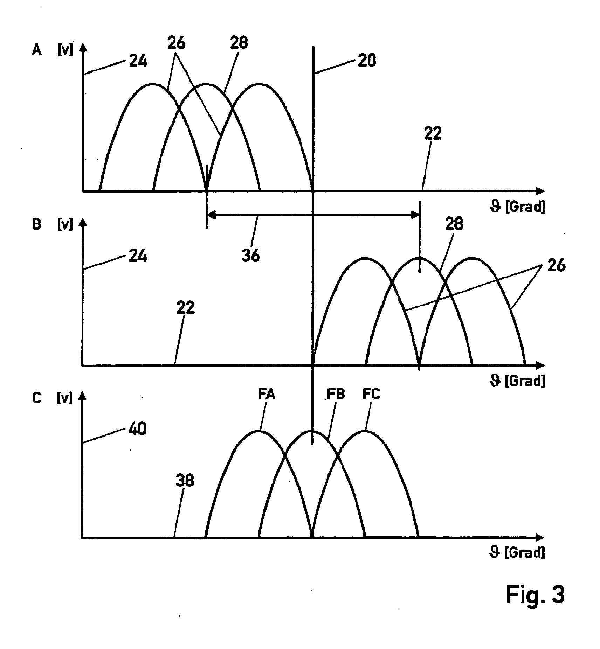

Diese derart angeordneten Richtcharakteristiken werden gemäß Fig. 1 genutzt zum Bilden von richtungsabhängigen Amplitudenfunktionen. Dazu werden die Richtcharakteristiken vom Richtungsbildner 16 einer Messeinrichtung 34 übergeben. Es erfolgt eine Amplitudenmessung durch Abtastung der Richtungen in vorbestimmten, kleinen Winkelschritten von beispielsweise 0,1 Grad über einen vorbestimmten Richtungsbereich um eine angenommene Signalrichtung herum. Dieser Vorgang wird im Einzelnen anhand der Darstellungen in Fig. 3 A-C näher erläutert.

Fig. 3 A-C zeigen graphisch die Bildung der richtungsabhängigen Amplitudenfunktionen. Fig. 3 A und Fig. 3 B sind von dem Richtdiagramm aus Fig. 2 abgeleitet. Es werden in gleicher Weise auf einer horizontalen Achse 22 der Empfangswinkel ϑ in Grad aufgetragen und auf einer vertikalen Achse 24 die normierte Antennenausgangsspannung U/U₀ in Volt. Dargestellt sind ferner die Hauptkeulen 26, 28 der zuvor bestimmten Richtcharakteristiken.

Fig. 3 A und Fig. 3 B verdeutlichen die Abtastung der Richtung um eine angenommene Signalrichtung 20. Der zu interessierende Richtungsbereich 36 bzw. Winkelbereich liegt beidseitig von der angenommenen Signalrichtung 20 und umfasst vorzugsweise eine Ausdehnung entsprechend einer doppelten Hauptkeulenbreite. Dieser vorbestimmte Richtungsbereich 36 wird sequentiell mittels der Hauptkeulen 26, 28 der Richtcharakteristiken in kleinen Winkelschritten abgetastet. Das Ergebnis dieser Abtastung sind drei gemessene, richtungsabhängige Amplitudenfunktionen FA, FB, FC, welche in Fig. 3 C dargestellt sind.

Wie unter Fig. 3 A und Fig. 3 B, werden in Fig. 3 C auf der horizontalen Achse 38 der Empfangswinkel ϑ in Grad aufgetragen. Die vertikale Achse 40 gibt die gemessene Amplitude in Volt an.

Die Erfindung ist jedoch nicht auf eine derartige sequentielle Bildung der richtungsabhängigen Amplitudenfunktionen FA, FB, FC beschränkt. Alternative Verfahren zur Bildung der richtungsabhängigen Amplitudenfunktionen FA, FB, FC sind denkbar. So ist es bspw. möglich, die richtungsabhängigen Amplitudenfunktionen FA, FB, FC mittels gleichzeitiger Richtungsbildung der Richtcharakteristiken mit vorbestimmten, gleich bleibenden Winkelabstand über einen vorbestimmten Richtungsbereich 36 zu erzeugen.

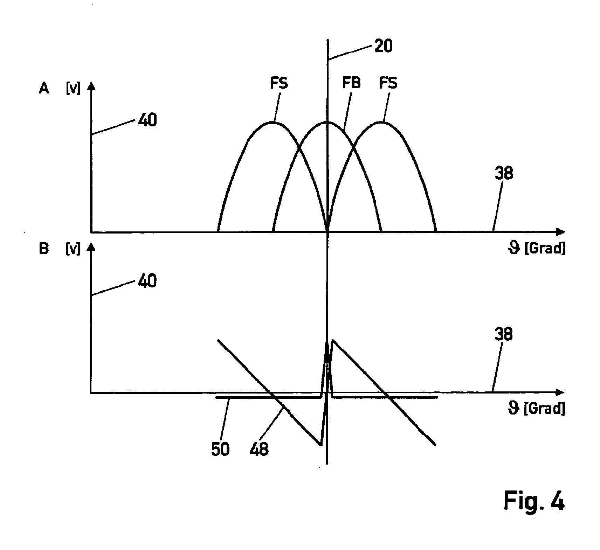

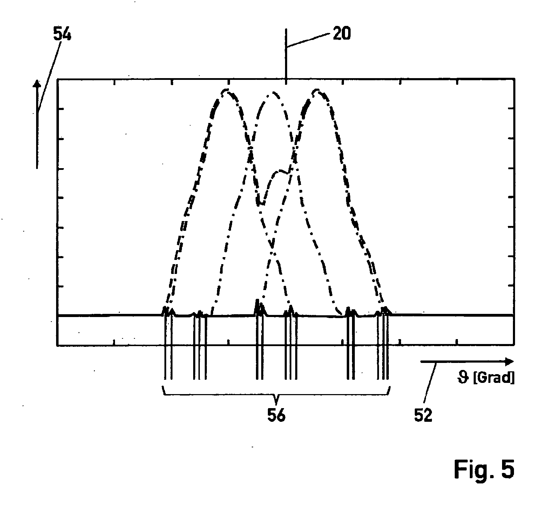

Die drei richtungsabhängigen Amplitudenfunktionen FA, FB, FC sind derart angeordnet, dass das Maximum der zentralen Amplitudenfunktion FB und die angenommene Signalrichtung 20 auf dem gleichen Winkel liegen. Sie werden gemäß Fig. 1 einer Berechnungseinheit 42 übergeben zum Bestimmen einer Summenfunktion FS durch Addition der beiden richtungsabhängigen Amplitudenfunktionen FA und FC. Diese Summenfunktion FS wird wiederum einem Differenzialglied 44 zum Bestimmen der zweiten Ableitung übergeben. Diese Differentiation wird im Einzelnen anhand der Darstellungen in Fig. 4 A-B und Fig. 5 näher erläutert.

Fig. 4 A zeigt eine graphische Darstellung der Summenfunktion FS und Fig. 4 B sowohl deren erste Ableitung 48 als auch deren zweite Ableitung 50. Auf den horizontalen Achsen 38 werden jeweils die Empfangswinkel ϑ in Grad aufgetragen und auf den vertikalen Achsen 40 die Amplituden in Volt. Da die Summenfunktion FS eine Funktion der Amplitude über dem Empfangswinkel ϑ ist, sind deren Ableitungen 48, 50 Ableitungen des Winkels ϑ bzw. des Ortes. Mittels der Ableitung 48 der Summenfunktion FS wird an der Stelle ϑ der Anstieg der Tangente an die Summenfunktion FS bestimmt und kann daher als Änderungsrate der Summenfunktion FS an dieser Stelle interpretiert werden. Die zweite Ableitung 50 der Summenfunktion FS beschreibt die Veränderung derjenigen Größe, die durch die erste Ableitung 48 bestimmt wird. Somit gibt die zweite Ableitung 50 Aufschluss über das Krümmungsverhalten der Summenfunktion FS.

Durch die spezielle bevorzugte Anordnung der Richtcharakteristiken sind die daraus resultierenden richtungsabhängigen Amplitudenfunktionen FA, FB, FC derart angeordnet, dass die zentrale Amplitudenfunktion FB ihr Maximum auf Höhe der angenommenen Signalrichtung 20 aufweist und folglich die Summenfunktion FS an dieser Stelle ein Minimum besitzt. Durch zweimaliges Differenzieren der Summenfunktion FS erhält die zweite Ableitung 50 der Summenfunktion FS ein lokales Maximum in der angenommenen Signalrichtung 20.

Fig. 5 entspricht im Wesentlichen Fig. 4, wobei es sich hier um eine graphische Darstellung von realen Messwerten eines Ausführungsbeispiels in einem Richtdiagramm handelt.

Auf einer horizontalen Achse 52 ist der Empfangswinkel ϑ in Grad aufgetragen mit der angenommenen Signalrichtung 20 bei 0 ° Grad. Auf der vertikalen Achse 54 ist die Amplitude in Volt aufgetragen. Erkennbar sind neben den drei strichpunktiert dargestellten richtungsabhängigen Amplitudenfunktionen FA, FB, FC auch die Summenfunktion FS als eine gestrichelte Linie. Die zweite Ableitung 50 der Summenfunktion FS ist als eine durchgezogene Linie im Richtdiagramm dargestellt. Es sind fünfzehn lokale Maxima 56 der zweiten Ableitung 50 erkennbar. Die Winkelwerte ϑ der lokalen Maxima 56 entsprechen den eventuellen, potentiellen Signalrichtungen der empfangenen Schallwellen.

Mittels der zentralen Amplitudenfunktion FB wird zunächst überprüft, ob bei diesen eventuellen, potentiellen Signalrichtungen eine nennenswerte Signalamplitude der einfallenden Schallwellen vorliegt. Sofern die Signale der eventuellen, potentiellen Signalrichtungen eine hinreichende Signalamplitude aufweisen, werden diese bspw. als i potentielle Signalrichtungen zᵢ gespeichert und gemäß Fig. 1 einer weiteren Berechnungseinheit 58 übergeben.

Diese weitere Berechnungseinheit 58 aus Fig. 1 ermittelt für jede potentielle Signalrichtung zᵢ eine Amplitudenfunktion Zᵢ. Dazu wird die zentrale Richtcharakteristik des Richtungsbildners 16 herangezogen. Zunächst wird für jede potentielle Signalrichtung zᵢ die Amplitudenfunktion Zᵢ über den Richtungsbereich 36 für die zentrale Richtcharakteristik berechnet unter der Annahme, dass eine Schallwellenfront aus dieser Richtung kommen würde. Anschließend werden diese Amplitudenfunktionen Zᵢ auf einen Maximalwert bspw. 1 normiert. Die derart ermittelten Amplitudenfunktionen Z₁, Z₂, ..., Zᵢ werden einer Analyseeinheit 60 übergeben, um daraus die tatsächlichen Signalrichtungen zu ermitteln. Ferner erhält diese Analyseeinheit 60 die zentrale richtungsabhängige Amplitudenfunktion FB der Messeinrichtung 34.

Die Analyseeinheit 60 ermittelt mittels eines statistischen Analyseverfahrens die Abhängigkeit einer Zielgröße von einer oder mehreren Ausgangsgrößen. In diesem Ausführungsbeispiel der Erfindung wird als statistisches Analyseverfahren die multiple lineare Regression herangezogen. Die Verwendung weiterer alternativer Analyseverfahren ist jedoch denkbar.

Die multiple lineare Regression ermöglicht die Erfassung eines Einflusses mehrerer erklärender Größen auf eine Zielgröße. Hier werden die Abhängigkeiten zwischen den potentiellen Signalrichtungen zᵢ und der zentralen richtungsabhängigen Amplitudenfunktion FB ermittelt.

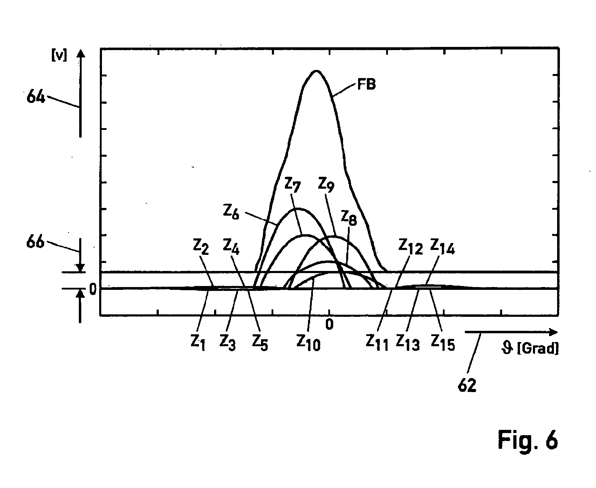

Fig. 6 zeigt das Ergebnis der multiplen linearen Regression. Für jede potentielle Signalrichtung zᵢ ist die berechnete Amplitude Zᵢ dargestellt, welche den jeweiligen Anteil dieser Einzelrichtung zᵢ an der gemessenen richtungsabhängigen Amplitudenfunktion FB bildlich darstellt. Dabei wird auf der horizontalen Achse 62 der Empfangswinkel ϑ in Grad aufgetragen und auf der vertikalen Achse 64 die Amplitude in Volt. Die beispielhaft dargestellten Amplituden Z₁, Z₂, ..., Z₁₅ der potentiellen Signalrichtungen Z₁, Z₂, ..., Z₁₅ entsprechen dabei den zuvor ermittelten lokalen Maxima 56 aus Fig. 5.

Diejenigen Signalrichtungen zᵢ, deren Amplitude Zᵢ sehr gering ist, werden als Zielrichtung verworfen. Lediglich die Signalrichtungen zᵢ, die eine hinreichende Amplitude Zᵢ aufweisen, entsprechen den tatsächlichen Signalrichtungen.

In diesem Ausführungsbeispiel gemäß Fig. 6 entsprechen die potentiellen Signalrichtungen z₆, z₇, z₈, z₉ und z₁₀ den tatsächlichen Signalrichtungen. Die Ergebnisse der multiplen linearen Regression sind somit sowohl die tatsächlichen Signalrichtungen als auch die dazugehörigen Signalstärken der schallabstrahlenden Ziele oder Objekte. Dabei können diese derart dicht benachbart sein, dass deren abgestrahlten Geräusche oder Schallwellen richtungsmäßig innerhalb der Hauptkeule einer Richtcharakteristik liegen und gleichzeitig empfangen werden. Kommen die Signale der schallabstrahlenden Ziele jedoch aus einem Richtungs-Kontinuum, ist eine Anwendung des Verfahrens nicht möglich.

In Fig. 6 ist ferner ein Gleichanteil 66 bzw. ein Offset dargestellt, welcher ebenfalls aus der multiplen linearen Regression resultiert. Dieser evtl. vorhandene Gleichanteil entsteht beispielsweise durch Rauschanteile in den Signalen.

Des Weiteren liefert die multiple lineare Regression eine Standardabweichung als Maß für die Güte der Übereinstimmung.

Bei einer Verfahrensvariante wird das erfindungsgemäße Verfahren in kurzen Zeitabständen angewandt. Dadurch entsteht eine im Wesentlichen kontinuierliche Anwendung, welche eine statistische Auswertung bezüglich der Eindeutigkeit der Messergebnisse liefert. Ferner ist durch die im Wesentlichen kontinuierliche Anwendung des Verfahrens eine dynamische Erkennung von Richtungsänderungen der schallabstrahlenden Ziele möglich.

Alle in der vorgenannten Figurenbeschreibung, in den Ansprüchen und in der Beschreibungseinleitung genannte Merkmale sind sowohl einzeln als auch in beliebiger Kombination miteinander einsetzbar. Die Erfindung ist somit nicht auf die beschriebenen bzw. beanspruchten Merkmalskombinationen beschränkt. Vielmehr sind alle Merkmalskombinationen als offenbart zu betrachten.

## Patentansprüche

1. Verfahren zum Peilen von schallabstrahlenden Zielen mittels einer Empfangsantenne (10) mit einer Vielzahl elektroakustischer oder optoakustischer Wandler (12) zum Empfangen von sich im Wasser ausbreitenden Schallwellen und Erzeugen von elektrischen Empfangssignalen (14), wobei zum Bilden konphaser Empfangssignale Zeitverzögerungskoeffizienten auf die Empfangssignale (14) angewandt werden und die konphasen Empfangssignale (14) zu Gruppensignalen addiert werden, die einem Richtungsbildner (16) zum Bilden von wenigstens drei gegeneinander versetzten Richtcharakteristiken zugeführt werden, wobei die Zeitverzögerungskoeffizienten zur Erzeugung der Richtcharakteristiken derart gewählt werden, dass eine zentrale Richtcharakteristik mit einer Hauptkeule (28) erzeugt wird, die, bei einer gedachten Darstellung der Richtcharakteristiken in einem horizontalen kartesischen Richtdiagramm (Fig.2), in dem die Antennenausgangsspannung (U/U₀) über den Empfangswinkel (ϑ) der Schallwellen aufgetragen ist, von beiden Seiten durch die Hauptkeulen (26) benachbarter Richtcharakteristiken überlappt wird, und zwar derart, dass sich diese beiden Hauptkeulen (26) auf Höhe desjenigen Empfangswinkels (ϑ*_{z}*) berühren oder schneiden, an dem die Hauptkeule (28) der zentralen Richtcharakteristik ihr Maximum (30) aufweist,
**dadurch gekennzeichnet, dass**
wenigstens drei richtungsabhängige Amplitudenfunktionen (FA, FB, FC) mittels der Hauptkeulen (26, 28) der erzeugten Richtcharakteristiken erzeugt werden und zwar in vorbestimmten, gleich bleibenden Winkelabständen über einen vorbestimmten Richtungsbereich (36),
eine Summenfunktion (FS) durch Addieren der beiden richtungsabhängigen Amplitudenfunktionen (FA, FC) bestimmt wird, die sich aus den beiden die zentrale Richtcharakteristik von beiden Seiten benachbarten Richtcharakteristiken ergeben,
die Summenfunktion (FS) zum Bestimmen ihrer zweiten Ableitung (50) zweimal differenziert wird, wobei die zweite Ableitung (50) der Summenfunktion (FS) lokale Maxima (56) aufweist, die den potentiellen diskreten Signalrichtungen (zᵢ) der empfangenen Schallwellen entsprechen und
die tatsächlichen Signalrichtungen mit den zugehörigen Signalstärken aus den potentiellen Signalrichtungen (zᵢ) mittels eines statistischen Analyseverfahrens zum Ermitteln von Abhängigkeiten zwischen den potentiellen Signalrichtungen (zᵢ) und einer zentralen richtungsabhängigen Amplitudenfunktion, insbesondere der multiplen linearen Regression, bestimmt werden, wobei diejenigen Signalrichtungen, deren Anteile an der zentralen richtungsabhängigen Amplitudenfunktion (FB) einen vorbestimmten Wert überschritten haben, als tatsächliche Signalrichtungen bestimmt werden.

2. Verfahren nach Anspruch 1,
**dadurch gekennzeichnet, dass**
die richtungsabhängigen Amplitudenfunktionen (FA, FB, FC) erzeugt werden mittels Schwenken der Richtcharakteristiken über einen vorbestimmten Richtungsbereich (36) und Abtastung des Richtungsbereiches (36) in vorbestimmten, gleich bleibenden Winkelabständen.

3. Verfahren nach Anspruch 1,
**dadurch gekennzeichnet, dass**
die richtungsabhängigen Amplitudenfunktionen (FA, FB, FC) erzeugt werden mittels gleichzeitiger Richtungsbildung der Richtcharakteristiken mit vorbestimmtem, gleich bleibenden Winkelabstand über einen vorbestimmten Richtungsbereich (36).

4. Verfahren nach einem der vorhergehenden Ansprüche,
**dadurch gekennzeichnet, dass**
das statistische Analyseverfahren der multiplen linearen Regression entspricht und ein Gleichanteil berechnet wird und/oder ein Maß für eine Güte der Messergebnisse geliefert wird.

5. Verfahren nach einem der vorhergehenden Ansprüche,
**dadurch gekennzeichnet, dass**
durch mehrmaliges Wiederholen des Verfahrens eine im Wesentlichen kontinuierliche Anwendung erzeugt wird, welche eine statistische Auswertung bezüglich der Eindeutigkeit der Messergebnisse ermöglicht und/oder eine dynamische Erkennung von Richtungsänderungen der schallabstrahlenden Ziele ermöglicht.

6. Vorrichtung zur Peilung von schallabstrahlenden Zielen mittels einer Empfangsantenne (10) mit einer Vielzahl elektroakustischer oder optoakustischer Wandler (12) zum Empfangen von sich im Wasser ausbreitenden Schallwellen und Erzeugen von elektrischen Empfangssignalen (14), wobei zur Bildung konphaser Empfangssignale (14) Zeitverzögerungskoeffizienten auf die Empfangssignale (14) anwendbar sind und die konphasen Empfangssignale (14) zu Gruppensignalen addierbar sind, die einem Richtungsbildner (16) zur Bildung von wenigstens drei gegeneinander versetzten Richtcharakteristiken zuführbar sind, wobei die Zeitverzögerungskoeffizienten zur Erzeugung der Richtcharakteristiken derart wählbar sind, dass eine zentrale Richtcharakteristik mit einer Hauptkeule (28) erzeugbar ist, die, bei einer gedachten Darstellung der Richtcharakteristiken in einem horizontalen, kartesischen Richtdiagramm (Fig. 2), in dem die Antennenausgangsspannung (U/U₀) über den Empfangswinkel (∂) der Schallwellen aufgetragen ist, von beiden Seiten durch die Hauptkeulen (26) benachbarter Richtcharakteristiken überlappbar ist, und zwar derart, dass sich diese beiden Hauptkeulen (26) auf Höhe desjenigen Empfangswinkels (ϑ*_{z}*) berühren oder schneiden, an dem die Hauptkeule (28) der zentralen Richtcharakteristik ihr Maximum (30) aufweist,
**gekennzeichnet durch**
eine Messeinrichtung (34), mittels der wenigstens drei richtungsabhängigen Amplitudenfunktionen (FA, FB, FC) mittels der Hauptkeulen (26, 28) der drei Richtcharakteristiken erzeugbar sind und zwar in vorbestimmten, gleich bleibenden Winkelabständen über einen vorbestimmten Richtungsbereich (36),
eine Berechnungseinheit (42), mittels der eine Summenfunktion (FS) mittels einer Addition der beiden richtungsabhängigen Amplitudenfunktionen (FA, FC) bestimmbar ist, welche sich aus den beiden die zentrale Richtcharakteristik von beiden Seiten benachbarten Richtcharakteristiken ergeben,
wobei die Summenfunktion (FS) zur Bestimmung ihrer zweiten Ableitung (50) mittels eines Differentialgliedes (44) zweimal differenzierbar ist und die zweite Ableitung (50) der Summenfunktion (FS) lokale Maxima (56) aufweist, die den potentiellen, diskreten Signalrichtungen (zᵢ) der empfangenen Schallwellen entsprechen, und
eine Analyseeinheit (60) zur Ermittelung von Abhängigkeiten zwischen den potentiellen Signalrichtungen (zᵢ) und einer zentralen richtungsabhängigen Amplitudenfunktion, die derart ausgebildet ist, um aus den potentiellen Signalrichtungen (zᵢ) tatsächliche Signalrichtungen mit den zugehörigen Signalstärken zu bestimmen, wobei diejenigen Signalrichtungen, deren Anteile an der zentralen richtungsabhängigen Amplitudenfunktion (FB) einen vorbestimmten Wert überschreiten, als tatsächliche Signalrichtungen bestimmbar sind.

7. Vorrichtung nach Anspruch 6,
**dadurch gekennzeichnet, dass**
die richtungsabhängigen Amplitudenfunktionen (FA, FB, FC) mittels Schwenken der Richtcharakteristiken über einen vorbestimmten Richtungsbereich (36) und Abtastung des Richtungsbereiches (36) mit vorbestimmten, gleich bleibenden Winkelabständen erzeugbar sind.

8. Vorrichtung nach Anspruch 6,
**dadurch gekennzeichnet, dass**
die richtungsabhängigen Amplitudenfunktionen (FA, FB, FC) durch gleichzeitiges Richtungsbilden der Richtcharakteristiken mit vorbestimmtem, gleich bleibenden Winkelabstand über einen vorbestimmten Richtungsbereich (36) erzeugbar sind.

9. Vorrichtung nach einem der Ansprüche 6 bis 8,
**dadurch gekennzeichnet, dass**
die Analyseeinheit (60) als statistisches Analyseverfahren eine multiple lineare Regression aufweist, welche einen Gleichanteil berechnet und/oder ein Maß für eine Güte der Messergebnisse liefert.

10. Vorrichtung nach einem der Ansprüche 6 bis 9,
**dadurch gekennzeichnet, dass**
durch mehrmaliges Wiederholen des Verfahrens eine im Wesentlichen kontinuierliche Anwendung erzeugbar ist, welche eine statistische Auswertung bezüglich der Eindeutigkeit der Messergebnisse ermöglicht und/oder eine Erkennung dynamischer Richtungsänderungen der schallabstrahlenden Ziele ermöglicht.

## Claims

1. A method for finding the direction of sound-emitting targets by a receiving aerial (10) including a plurality of electroacoustic or optoacoustic converters (12) for receiving sound waves being propagated in water and for generating electrical received signals (14), wherein time delay coefficients are used on the received signals (14) for forming conphase received signals and the conphase received signals (14) are added to group signals that are supplied to a direction generator (16) for generating at least three direction characteristics offset relative to one another, wherein the time delay coefficients for generating the direction characteristics are selected in such a manner that a central direction characteristic having a major lobe (28) is generated that, in an imaginary representation of the direction characteristics in a horizontal, Cartesian direction diagram (fig. 2) in which the aerial output voltage (U/U₀) is applied over the received angle (ϑ) of the sound waves, is overlapped from both sides by the major lobes (26) of adjacent direction characteristics in such a manner that these two major lobes (26) contact or intersect at the level of the received angle (ϑ_{z}) at which the major lobe (28) of the central direction characteristic has its maximum (30),
**characterized in that**
at least three directionally dependent amplitude functions (FA, FB, FC) are generated by the main lobes (26, 28) of the generated direction characteristics in predetermined angular intervals that remain the same over a predetermined direction range (36),
a summing function (FS) is determined by adding the two directionally dependent amplitude functions (FA, FC) that result from the two direction characteristics adjacent to the central direction characteristic from both sides, the summing function (FS) is differentiated twice for determining its second derivation (50), wherein the second derivation (50) of the summing function (FS) has local maxima (56) that correspond to the potential discrete signal directions (zᵢ) of the received sound waves, and
the actual signal directions with the associated signal strengths are determined from the potential signal directions by a statistical analysis method for determining dependencies between the potential signal directions (zᵢ) and a central directionally dependent amplitude function, in particular of the multiple linear regression, wherein those signal directions whose components exceeded a predetermined value on the central directionally dependent amplitude function (FB) are determined as actual signal directions.

2. The method according to claim 1,
**characterized in that**
the directionally dependent amplitude functions (FA, FB, FC) are generated by swinging the direction characteristics over a predetermined direction range (36) and scanning the direction range (36) in predetermined angular intervals that remain the same.

3. The method according to claim 1,
**characterized in that**
the directionally dependent amplitude functions (FA, FB, FC) are generated by a simultaneous generating of the direction of the direction characteristics with a predetermined angular interval that remains the same over a predetermined direction range (36).

4. The method according to one of the preceding claims,
**characterized in that**
the statistical analysis method corresponds to the multiple linear regression and an equal component is calculated and/or a measure for a quality of the measured results is supplied.

5. The method according to one of the preceding claims,
**characterized in that**
a substantially continuous use is produced by multiply repeating the method, which use makes possible a statistical evaluation relative to the unambiguity of the measured results and/or makes possible a dynamic recognition of direction changes of the sound-emitting targets.

6. A device for finding the direction of sound-emitting targets by a receiving aerial (10) including a plurality of electroacoustic or optoacoustic converters (12) for receiving sound waves being propagated in water and for generating electrical received signals (14), wherein time delay coefficients can be used on the received signals (14) for forming conphase received signals and the conphase received signals (14) can be added to group signals that can be supplied to a direction generator (16) for generating at least three direction characteristics offset relative to each other, wherein the time delay coefficients for generating the direction characteristics can be selected in such a manner that a central direction characteristic having a major lobe (28) can be generated that, in an imaginary representation of the direction characteristics in a horizontal, Cartesian direction diagram (fig. 2) in which the aerial output voltage (U/U₀) is applied over the received angle (ϑ) of the sound waves, can be overlapped from both sides by the major lobes (26) of adjacent direction characteristics in such a manner that these two major lobes (26) contact or intersect at the level of the received angle (ϑ_{z}) at which the major lobe (28) of the central direction characteristic has its maximum (30),
**characterized by**
a measuring device (34) with which at least three directionally dependent amplitude functions (FA, FB, FC) can be generated by the major lobes (26, 28) of the three direction characteristics in predetermined angular intervals that remain the same over a predetermined direction range (36),
a calculating unit (42) with which a summing function (FS) can be determined by an addition of the two directionally dependent amplitude functions (FA, FC) that result from the two direction characteristics adjacent to the central direction characteristic from both sides,
wherein the summing function (FS) for determining its second derivation (50) can be differentiated twice by a differential member (44), and the second derivation (50) of the summing function (FS) has local maxima (56) that correspond to the potential discrete signal directions (zᵢ) of the received sound waves, and
an analysis unit (60) for determining dependencies between the potential signal directions (zᵢ) and a central directionally dependent amplitude function that is constructed in such a manner as to determine actual signal directions with the associated signal strengths from the potential signal directions (zᵢ), wherein those signal directions whose components exceed a predetermined value on the central directionally dependent amplitude function (FB) can be determined as actual signal directions.

7. The device according to claim 6,
**characterized in that**
the directionally dependent amplitude functions (FA, FB, FC) can be generated by swinging the direction characteristics over a predetermined direction range (36) and scanning the direction range (36) in predetermined angular intervals that remain the same.

8. The device according to claim 6,
**characterized in that**
the directionally dependent amplitude functions (FA, FB, FC) can be generated by simultaneously generating directions of the direction characteristics in a predetermined angular interval that remains the same over a predetermined direction range (36).

9. The device according to one of claims 6 to 8,
**characterized in that**
the analysis unit (60) has a multiple linear regression as a statistical analysis method that calculates an equal component and/or supplies a measure for a quality of the measured results.

10. The device according to one of claims 6 to 9,
**characterized in that**
a substantially continuous use can be produced by multiply repeating the method, which use makes possible a statistical evaluation relative to the unambiguity of the measured results and/or makes possible a recognition of dynamic direction changes of the sound-emitting targets.

## Revendications

1. Procédé de localisation de cibles à émissions sonores au moyen d'une antenne de réception (10) comportant une pluralité de transducteurs électroacoustiques ou optoacoustiques (12) pour la réception d'ondes sonores se propageant dans l'eau et la production de signaux de réception électriques (14), dans lequel, pour la génération de signaux de réception en phase, des coefficients de temporisation sont appliqués aux signaux de réception (14) et les signaux de réception en phase (14) sont additionnés pour former des signaux de groupe qui sont fournis à un générateur de direction (16) pour la génération d'au moins trois caractéristiques de directivité décalées les unes par rapport aux autres, les coefficients de temporisation étant choisis, pour la production des caractéristiques de directivité, de telle manière qu'une caractéristique de directivité centrale soit produite avec un lobe principal (28) qui, dans une représentation imaginaire des caractéristiques de directivité dans un diagramme de directivité cartésien horizontal (Fig. 2) dans lequel la tension de sortie de l'antenne (U/U₀) est tracée en fonction de l'angle de réception (ϑ) des ondes sonores, est chevauché sur les deux côtés par les lobes principaux (26) de caractéristiques de directivité adjacentes et ce, de telle manière que ces deux lobes principaux (26) se touchent ou se coupent à hauteur de l'angle de réception (ϑ_{Z}) au niveau duquel le lobe principal (28) de la caractéristique de directivité centrale présente son maximum (30),
**caractérisé en ce que**
au moins trois fonctions d'amplitude (FA, FB, FC) dépendantes de la direction sont générées au moyen des lobes principaux (26, 28) des caractéristiques de directivité générées et ce, selon des distances angulaires constantes prédéterminées sur une plage directionnelle (36) prédéterminée,
une fonction de somme (FS) est déterminée par addition des deux fonctions d'amplitude (FA, FC) dépendantes de la direction résultant des deux caractéristiques de directivité adjacentes, sur les deux côtés, à la caractéristique de directivité centrale,
la fonction de somme (FS) est différenciée deux fois pour déterminer sa dérivée seconde (50), la dérivée seconde (50) de la fonction de somme (FS) présentant des maxima locaux (56) qui correspondent aux directions de signal discrètes potentielles (zᵢ) des ondes sonores reçues, et
les directions de signal réelles ainsi que les intensités de signal correspondantes sont déterminées à partir des directions de signal potentielles (zᵢ) au moyen d'un procédé d'analyse statistique permettant d'établir des dépendances entre les directions de signal potentielles (zᵢ) et une fonction d'amplitude centrale dépendante de la direction, notamment la régression linéaire multiple, moyennant quoi celles des directions de signal dont les parts à la fonction d'amplitude centrale dépendante de la direction (FB) dépassent une valeur prédéfinie sont déterminées comme étant les directions de signal réelles.

2. Procédé selon la revendication 1,
**caractérisé en ce que**
les fonctions d'amplitude (FA, FB, FC) dépendantes de la direction sont générées par orientation des caractéristiques de directivité sur une plage directionnelle (36) prédéterminée et par balayage de la plage directionnelle (36) selon des distances angulaires constantes prédéterminées.

3. Procédé selon la revendication 1,
**caractérisé en ce que**
les fonctions d'amplitude (FA, FB, FC) dépendantes de la direction sont générées par génération de direction simultanée des caractéristiques de directivité avec une distance angulaire identique prédéterminée sur une plage directionnelle (36) prédéterminée.

4. Procédé selon l'une des revendications précédentes,
**caractérisé en ce que**
le procédé d'analyse statistique correspond à la régression linéaire multiple et une composante continue est calculée et/ou un indice pour une qualité des résultats de mesure est fournie.

5. Procédé selon l'une des revendications précédentes,
**caractérisé en ce que**
la réitération multiple du procédé favorise une utilisation sensiblement continue, laquelle permet une évaluation statistique relativement à l'univocité des résultats de mesure et/ou une reconnaissance dynamique des modifications directionnelles des cibles à émissions sonores.

6. Dispositif de localisation de cibles à émissions sonores au moyen d'une antenne de réception (10) comportant une pluralité de transducteurs électroacoustiques ou optoacoustiques (12) pour la réception d'ondes sonores se propageant dans l'eau et la production de signaux de réception électriques (14), dans lequel, pour la génération de signaux de réception (14) en phase, des coefficients de temporisation peuvent être appliqués aux signaux de réception (14) et les signaux de réception (14) en phase peuvent être additionnés pour former des signaux de groupe qui peuvent être fournis à un générateur de direction (16) pour la génération d'au moins trois caractéristiques de directivité décalées les unes par rapport aux autres, les coefficients de temporisation pouvant être choisis, pour la production des caractéristiques de directivité, de telle manière qu'une caractéristique de directivité centrale puisse être produite avec un lobe principal (28) qui, dans une représentation imaginaire des caractéristiques de directivité dans un diagramme de directivité cartésien horizontal (Fig. 2), dans lequel la tension de sortie de l'antenne (U/U₀) est tracée en fonction de l'angle de réception (ϑ) des ondes sonores, peut être chevauché sur les deux côtés par les lobes principaux (26) de caractéristiques de directivité adjacentes et ce, de telle manière que ces deux lobes principaux (26) se touchent ou se coupent à hauteur de l'angle de réception (ϑ_{Z}) au niveau duquel le lobe principal (28) de la caractéristique de directivité centrale présente son maximum (30),
**caractérisé par**
un dispositif de mesure (34) permettant de générer au moins trois fonctions d'amplitude (FA, FB, FC) dépendantes de la direction au moyen des lobes principaux (26, 28) des trois caractéristiques de directivité et ce, selon des distances angulaires constantes prédéterminées sur une plage directionnelle (36) prédéterminée,
une unité de calcul (42) permettant de déterminer une fonction de somme (FS) par addition des deux fonctions d'amplitude (FA, FC) dépendantes de la direction résultant des deux caractéristiques de directivité adjacentes, sur les deux côtés, à la caractéristique de directivité centrale,
la fonction de somme (FS) pouvant être différenciée deux fois, au moyen d'un élément différentiel (44), pour déterminer sa dérivée seconde (50) et la dérivée seconde (50) de la fonction de somme (FS) présentant des maxima locaux (56) qui correspondent aux directions de signal discrètes potentielles (zᵢ) des ondes sonores reçues, et
une unité d'analyse (60) pour l'établissement des dépendances entre les directions de signal potentielles (zᵢ) et une fonction d'amplitude centrale dépendante de la direction, celle-ci étant conçue pour déterminer, à partir des directions de signal potentielles (zᵢ), des directions de signal réelles ainsi que les intensités de signal correspondantes, moyennant quoi celles des directions de signal dont les parts à la fonction d'amplitude centrale dépendante de la direction (FB) dépassent une valeur prédéfinie peuvent être déterminées comme étant les directions de signal réelles.

7. Dispositif selon la revendication 6,
**caractérisé en ce que**
les fonctions d'amplitude (FA, FB, FC) dépendantes de la direction peuvent être générées par orientation des caractéristiques de directivité sur une plage directionnelle (36) prédéterminée et par balayage de la plage directionnelle (36) selon des distances angulaires constantes prédéterminées.

8. Dispositif selon la revendication 6,
**caractérisé en ce que**
les fonctions d'amplitude (FA, FB, FC) dépendantes de la direction peuvent être générées par génération de direction simultanée des caractéristiques de directivité avec une distance angulaire identique prédéterminée sur une plage directionnelle (36) prédéterminée.

9. Dispositif selon l'une des revendications 6 à 8,
**caractérisé en ce que**
l'unité d'analyse (60) met en oeuvre, comme procédé d'analyse statistique, une régression linéaire multiple, laquelle calcule une composante continue et/ou un indice pour une qualité des résultats de mesure.

10. Dispositif selon l'une des revendications 6 à 9,
**caractérisé en ce que**
la réitération multiple du procédé peut favoriser une utilisation sensiblement continue, laquelle permet une évaluation statistique relativement à l'univocité des résultats de mesure et/ou une reconnaissance des modifications directionnelles dynamiques des cibles à émissions sonores.
